# EUROPEAN PATENT SPECIFICATION

(11) **EP 4 139 389 B1**
(45) Date of publication and mention of the grant of the patent: **29.11.2023**
(21) Application number: 20721545.0
(22) Date of filing: 23.04.2020
(51) Int. Cl.: C08K 5/3475, C09J 183/04

(54) **OPTICAL BONDING SILICONE WITH UV BLOCKER FOR OUTDOOR APPLICATION**
SILIKONVERBINDUNG MIT UV-BLOCKER ZUR AUSSENANWENDUNG
SILICONE POUR COLLAGE OPTIQUE AVEC BLOQUEUR UV POUR APPLICATION EN EXTÉRIEUR

(43) Date of publication of application: 01.03.2023
(73) Proprietor: Wacker Chemie AG, 81737 München (DE)
(72) Inventor: SHAO, Yan, 48105 Ann Arbor, MI (US)
(74) Representative: Mieskes, Klaus Theoderich
(86) International application number: PCT/EP2020/061377
(87) International publication number: WO 2021/213662

(56) References cited:
- EP-A1- 3 070 748
- WO-A1-2019/133580

## Description

The invention relates to transparent silicone compositions comprising as special UV blocker and its use in optical bonding outdoor applications.

Optical bonding is more and more being applied in the field of electrical display for filling the air gap between a touch screen panel and a display module (touch film or glass and overlay), to improve visibility, readability, and durability. Acrylate polymer is usually used as an optical bonding agent for consumer electronics displays, such as smartphones and tablets. There're two forms of Acrylates: optically clear adhesive (OCA, tape form) and optically clear resin (OCR, liquid form). Acrylate OCR is cured under UV irradiation. In recent years, optically clear silicone material, which can be cured by either heating or UV irradiation, was introduced into the lamination process of substrate.

Nowadays there is a high request for large display sizes especially in outdoor applications like displays for public viewing or automotive touch screen displays. But such displays are exposed to solar radiation and therefore also to aggressive UV radiation. Especially the UVA and UVB-radiation (280nm-400nm) leads to a negative influence on the displays like.

In order to introduce UV-blocking function groups into silicone synthesis methods have been proposed in prior arts (see US9482788B2 and WO2009147020A1). The basic ideas in prior arts are generating new molecules to combining both silicone and UV blocking function groups by covalent bonding. These methods include complicated synthesis and purification process, which resulted in relatively high cost of the materials. Another disadvantage is there is no guarantee to have good compatibility between these new molecules and traditional silicone formulations, which means it could be difficult to introduce these new molecules into many existing formulations to enhance the UV blocking capability. The percentage of these new molecules might be relatively high since the UV blocking function groups have been diluted in these new molecules, which means the original formulations could be totally changed after introducing these new molecules. It is hard to keep the original properties and at the same time enhance UV blocking capability.

WO 2019/133580 A discloses an optically clear curable adhesive composition for a touch panel and display device comprising a composition based on i) a vinyl functional silicone, ii) a hydride functional silicone and iii) a hydrosilylation catalyst, with iv) a UV absorbing additive package comprising a hydroxyphenyl benzotriazole or its derivative, a benzophenone and an amine light stabilizer. It is an object of the invention to improve the prior art, in particular to provide transparent silicone compositions showing improved UV-stability and thus being usable in optical bonding outdoor applications.

A subject of the present invention provides a hydrosilylation curable silicone composition for optical bonding outdoor application comprising,
(A) at least one organopolysiloxane having at least two silicon-bonded alkenyl groups per molecule;
(B) at least one organohydrogenpolysiloxane having at least two silicon-bonded hydrogen atoms per molecule, in an amount such that an amount of silicon-bonded hydrogen atoms in this component being from 0.1 to 20 mol per 1 mol of silicon-bonded alkenyl groups in component (A);
(C) at least one hydrosilylation reaction catalyst, in an amount which accelerates the curing of the present composition
(D) from 0.5wt% to 3.0wt% (= % by weight) of the UV-blocker: 2-(2H-Benzotriazol-2-yl)-6-dodecyl-4-methylphenol based on the total weight of the composition.

### Component (A):

The compound (A) used in accordance with the invention may comprise silicon-free organic compounds having preferably at least two aliphatically unsaturated groups, and also organosilicon compounds having preferably at least two aliphatically unsaturated groups, or else mixtures thereof.

Examples of silicon-free organic compounds (A) are 1,3,5-trivinylcyclohexane, 2,3-dimethyl-1,3-butadiene, 7-methyl-3-methylene-1,6-octadiene, 2-methyl-1,3-butadiene, 1,5-hexadiene, 1,7-octadiene, 4,7-methylene-4,7,8,9-tetrahydroindene, methylcyclopentadiene, 5-vinyl-2-norbornene, bicyclo[2.2.1]hepta-2,5-diene, 1,3-diisopropenylbenzene, polybutadiene containing vinyl groups, 1,4-divinylcyclohexane, 1,3,5-triallylbenzene, 1,3,5-trivinylbenzene, 1,2,4-trivinylcyclohexane, 1,3,5-triisopropenylbenzene, 1,4-divinylbenzene, 3-methylhepta-1,5-diene, 3-phenylhexa-1,5-diene, 3-vinylhexa-1,5-diene, and 4,5-dimethyl-4,5-diethylocta-1,7-diene, N,N'-methylenebisacrylamide, 1,1,1-tris(hydroxymethyl)propane triacrylate, 1,1,1-tris(hydroxymethyl)propane trimethacrylate, tripropylene glycol diacrylate, diallyl ether, diallylamine, diallyl carbonate, N,N'-diallylurea, triallylamine, tris(2-methylallyl)amine, 2,4,6-triallyloxy-1,3,5-triazine, triallyl-s-triazine-2,4,6(1H,3H,5H)-trione, diallyl malonate, polyethylene glycol diacrylate, polyethylene glycol dimethacrylate, poly(propylene glycol) methacrylate.

Organosilicon compounds (A) used that have SiC-bonded radicals with aliphatic carbon-carbon multiple bonds are preferably linear or branched organopolysiloxanes comprising units of the general formula (I)

R⁴ₐR⁵_{b}SiO_{(4-a-b)/2} (I)

where
**R⁴** independently at each occurrence, identically or differently, is an organic or inorganic radical free from aliphatic carbon-carbon multiple bonds,
**R⁵** independently at each occurrence, identically or differently, is a monovalent, substituted or unsubstituted, SiC-bonded hydrocarbon radical having at least one aliphatic carbon-carbon multiple bond,
**a** is 0, 1, 2, or 3, and
**b** is 0, 1, or 2,
with the proviso that the sum a + b is less than or equal to 3 and there are at least 2 radicals R⁵ per molecule.

Radical R⁴ may comprise monovalent or polyvalent radicals, in which case the polyvalent radicals, such as divalent, trivalent, and tetravalent radicals, for example, join two or more, such as two, three, or four, for instance, siloxy units of the formula (I) to one another.

Further examples of R⁴ are the monovalent radicals -F, - Cl, -Br, OR⁶, -CN, -SCN, -NCO, and SiC-bonded, substituted or unsubstituted hydrocarbon radicals which may be interrupted by oxygen atoms or by the group -C(O)-, and also divalent radicals Si-bonded on both sides in accordance with formula (I). If radical R⁴ comprises SiC-bonded, substituted hydrocarbon radicals, preferred substituents are halogen atoms, phosphorus-containing radicals, cyano radicals, -OR⁶, -NR⁶-, -NR⁶₂, -NR⁶-C(O)-NR⁶₂, -C(O)-NR⁶₂, -C(O)R⁶, -C(O)OR⁶, -SO₂-Ph, and -C₆F₅. In that case R⁶, independently at each occurrence, identically or differently, denotes a hydrogen atom or a monovalent hydrocarbon radical having 1 to 20 carbon atoms, and Ph is the phenyl radical.

Examples of radicals R⁴ are alkyl radicals, such as the methyl, ethyl, n-propyl, isopropyl, n-butyl, isobutyl, tert-butyl, n-pentyl, isopentyl, neopentyl, tert-pentyl radical, hexyl radicals, such as the n-hexyl radical, heptyl radicals, such as the n-heptyl radical, octyl radicals, such as the n-octyl radical and isooctyl radicals, such as the 2,2,4-trimethylpentyl radical, nonyl radicals, such as the n-nonyl radical, decyl radicals, such as the n-decyl radical, dodecyl radicals, such as the n-dodecyl radical, and octadecyl radicals, such as the n-octadecyl radical, cycloalkyl radicals, such as cyclopentyl, cyclohexyl, cycloheptyl, and methylcyclohexyl radicals, aryl radicals, such as the phenyl, naphthyl, anthryl, and phenanthryl radical, alkaryl radicals, such as o-, m-, p-tolyl radicals, xylyl radicals, and ethylphenyl radicals, and aralkyl radicals, such as the benzyl radical, the α- and the β-phenylethyl radical.

Examples of substituted radicals R⁴ are haloalkyl radicals, such as the 3,3,3-trifluoro-n-propyl radical, the 2,2,2,2' ,2',2'-hexafluoroisopropyl radical, the heptafluoroisopropyl radical, haloaryl radicals, such as the o-, m-, and p-chlorophenyl radical, -(CH₂)-N(R⁶)C(O)NR⁶₂, -(CH₂)-C(O)NR⁶₂, -(CH₂)ₒ-C(O)R⁶, -(CH₂)ₒ-C(O)OR⁶, -(CH₂)ₒ-C(O)NR⁶₂, -(CH₂)-C(O)-(CH₂)ₚC(O)CH₃, - (CH₂)-O-CO-R⁶, -(CH₂)-NR⁶-(CH₂)ₚ-NR⁶₂, -(CH₂)ₒ-O-(CH₂)ₚCH (OH) CH₂OH, -(CH₂)ₒ(OCH₂CH₂)ₚOR⁶, -(CH₂)ₒ-SO₂-Ph, and - (CH₂)ₒ-O-C₆F₅, where R⁶ and Ph correspond to the definition indicated therefor above, and o and p are identical or different integers between 0 and 10.

Examples of R⁴ as divalent radicals Si-bonded on both sides in accordance with formula (I) are radicals which derive from the monovalent examples stated above for radical R⁴ by virtue of an additional bond taking place through substitution of a hydrogen atom; examples of such radicals are - (CH₂)-, -CH(CH₃)-, -C(CH₃)₂-, -CH(CH₃)-CH₂-, -C₆H₄-, -CH(Ph)-CH₂-, -C(CF₃)₂-, -(CH₂)-C₆H₄-(CH₂)ₒ-, - (CH₂)ₒ-C₆H₄-C₆H₄-(CH₂)ₒ-, -(CH₂O)ₚ, (CH₂CH₂O)ₒ, -(CH₂)ₒ-Oₓ-C₆H₄-SO₂-C₆H₄-Oₓ-(CH₂)ₒ-, where x is 0 or 1, and Ph, o, and p have the definition stated above.

Preferably radical R⁴ comprises a monovalent, SiC-bonded, optionally substituted hydrocarbon radical which has 1 to 18 carbon atoms and is free from aliphatic carbon-carbon multiple bonds, more preferably a monovalent, SiC-bonded hydrocarbon radical which has 1 to 6 carbon atoms and is free from aliphatic carbon-carbon multiple bonds, and more particularly the methyl or phenyl radical.

Radical R⁵ may comprise any desired groups amenable to an addition reaction (hydrosilylation) with an SiH-functional compound.

If radical R⁵ comprises SiC-bonded, substituted hydrocarbon radicals, preferred substituents are halogen atoms, cyano radicals, and -OR⁶, where R⁶ has the above-stated definition.

Preferably radical R⁵ comprises alkenyl and alkynyl groups having 2 to 16 carbon atoms, such as vinyl, allyl, methallyl, 1-propenyl, 5-hexenyl, ethynyl, butadienyl, hexadienyl, cyclopentenyl, cyclopentadienyl, cyclohexenyl, vinylcyclohexylethyl, divinylcyclohexylethyl, norbornenyl, vinylphenyl, and styryl radicals, with vinyl, allyl, and hexenyl radicals being particularly preferred for use.

The molecular weight of the constituent (A) may vary within wide limits, as for instance between 10² and 10⁶ g/mol. Hence, for example, constituent (A) may comprise a relatively low molecular mass, alkenyl-functional oligosiloxane, such as 1,2-divinyltetramethyldisiloxane, but may also be a high-polymer polydimethylsiloxane, for example with a molecular weight of 10⁵ g/mol (number average determined by means of NMR), that possesses in-chain or terminal Si-bonded vinyl groups. The structure of the molecules forming the constituent (A) is also not fixed; in particular, the structure of a siloxane of relatively high molecular mass, in other words an oligomeric or polymeric siloxane, may be linear, cyclic, branched, or else resinous, network-like. Linear and cyclic polysiloxanes are preferably composed of units of the formula R⁴₃SiO_{1/2}, R⁵R⁴₂SiO_{1/2}, R⁵R⁴SiO_{1/2}, and R⁴₂SiO_{2/2}, where R⁴ and R⁵ have the definition indicated above. Branched and network-like polysiloxanes additionally include trifunctional and/or tetrafunctional units, with preference being given to those of the formulae R⁴SiO_{3/2}, R⁵SiO_{3/2}, and SiO_{4/2}. It will be appreciated that mixtures of different siloxanes satisfying the criteria of constituent (A) may also be used.

Particularly preferred as component (A) is the use of vinyl-functional, substantially linear polydiorganosiloxanes having a viscosity of 0.01 to 500 000 Pa•s, more preferably of 0.1 to 100 000 Pa•s, in each case at 25°C.

### Component (B):

As organosilicon compound (B) it is possible to use all hydrogen-functional organosilicon compounds which have also been employed to date in addition-crosslinkable compositions.

Organopolysiloxanes (B) used which have Si-bonded hydrogen atoms are preferably linear, cyclic, or branched organopolysiloxanes composed of units of the general formula (III)

R⁴_{c}H_{d}SiO_{(4-c-d)/2} (III)

where
**R⁴** has the definition stated above,
**c** is 0, 1, 2, or 3, and
**d** is 0, 1, or 2,
with the proviso that the sum of c + d is less than or equal to 3 and there are at least two Si-bonded hydrogen atoms per molecule.

The organopolysiloxane (B) used in accordance with the invention preferably contains Si-bonded hydrogen in a range from 0.04 to 1.7 percent by weight (wt%), based on the total weight of the organopolysiloxane (B).

The molecular weight of the constituent (B) may likewise vary within wide limits, as for instance between 10² and 10⁶ g/mol. Thus constituent (B) may comprise, for example, an SiH-functional oligosiloxane of relatively low molecular mass, such as tetramethyldisiloxane, or alternatively may comprise a silicone resin having SiH groups or a high-polymeric polydimethylsiloxane that possesses SiH groups within the chain or terminally.

The structure of the molecules that form the constituent (B) is also not fixed; in particular, the structure of an SiH-containing siloxane of relatively high molecular mass, in other words oligomeric or polymeric, may be linear, cyclic, branched, or else resinous, network-like. Linear and cyclic polysiloxanes (B) are composed preferably of units of the formula R⁴₃SiO_{1/2}, HR⁴₂SiO_{1/2}, HR⁴SiO_{2/2}, and R⁴₂SiO_{2/2}, with R⁴ having the definition indicated above. Branched and network-like polysiloxanes additionally include trifunctional and/or tetrafunctional units, with preference being given to those of the formulae R⁴SiO_{3/2}, HSiO_{3/2}, and SiO_{4/2}, where R⁴ has the definition indicated above.

It will be appreciated that mixtures of different siloxanes satisfying the criteria of constituent (B) may also be used. Particularly preferred is the use of low molecular mass, SiH-functional compounds such as tetrakis(dimethylsiloxy)silane and tetramethylcyclotetrasiloxane, and also of SiH-containing siloxanes of higher molecular mass, such as poly(hydrogenmethyl)siloxane and poly(dimethylhydrogenmethyl)siloxane with a viscosity at 25°C of 10 to 20 000 mPa•s, or similar SiH-containing compounds in which some of the methyl groups have been replaced by 3,3,3-trifluoropropyl or phenyl groups. The amount of constituent (B) in the crosslinkable silicone compositions (X) of the invention is preferably such that the molar ratio of SiH groups to aliphatically unsaturated groups from (A) is 0.1 to 20, more preferably between 0.3 and 2.0.

The components (A) and (B) used in accordance with the invention are commercial products and/or may be prepared by methods that are common within chemistry.

### Component (C):

Component (C) is a hydrosilylation reaction catalyst. The hydrosilylation reaction catalyst of component (C) is used to promote the reaction of the alkenyl groups of component (A) with the silicon-bonded hydrogen atoms of component (B).

Examples of component (C) include platinum catalysts, rhodium catalysts, and palladium catalysts. Platinum catalysts are preferable because of their ability to significantly stimulate the cure of the present composition. Examples of the platinum catalysts include platinum micropowder, chloroplatinic acid, alcohol solutions of chloroplatinic acid, platinum/alkenylsiloxane complexes, platinum/olefin complexes, and platinum/carbonyl complexes, preferably, platinum/alkenylsiloxane complexes. Examples of the alkenylsiloxanes include 1,3-divinyl-1,1,3,3-tetramethyldisiloxane, 1,3,5,7-tetramethyl-1,3,5,7-tetravinylcyclotetrasiloxane, alkenylsiloxanes obtained by substituting groups such as ethyl, phenyl etc. for some of the methyl groups of the above-mentioned alkenylsiloxanes, and alkenylsiloxanes obtained by substituting groups such as allyl, hexenyl, etc. for the vinyl groups of the above-mentioned alkenylsiloxanes. 1,3-divinyl-1,1,3,3-tetramethyldisiloxane is particularly preferable because of the excellent stability of the platinum/alkenylsiloxane complex. Also, due to the improvement in the stability of the complex that their addition may bring, it is desirable to add 1,3-divinyl-1,1,3,3-tetramethyldisiloxane, 1,3-diallyl-1,1,3,3-tetramethyldisiloxane, 1,3-divinyl-1,3-dimethyl-1,3-diphenyldisiloxane, 1,3-divinyl-1,1,3,3-tetraphenyldisiloxane, 1,3,5,7-tetramethyl-1,3,5,7-tetravinylcyclotetrasiloxane and other alkenylsiloxanes and organosiloxane oligomers such as dimethylsiloxane oligomers to the platinum/alkenylsiloxane complex, with alkenylsiloxanes being particularly preferable.

There are no limitations on the content of component (C) as long as the amount promotes curing of the present composition. However, specifically, in the present composition, component (C) is preferably present in an amount resulting in a platinum content of 0.05 to 100 ppm (parts per million) by weight, more preferably 0.1 to 10 ppm by weight, particularly preferred 0.1 to 5 ppm by weight, relative to 100 parts by weight of the total of components (A) and (B). This is due to the fact that when the content of component (C) is below the lower limit of the above-mentioned range, the present composition tends to fail to completely cure, and, on the other hand, when it exceeds the upper limit of the above-mentioned range, problems may arise in terms imparting various colors to the resultant cured product.

### Component (D):

It has surprisingly been found that the inventive transparent silicone compositions comprising the special UV-blocker 2-(2H-Benzotriazol-2-yl)-6-dodecyl-4-methylphenol can be dissolved into the inventive composition. Such compound is commercially available e.g. under the tradename TINUVIN^{®} 171 and TINUVIN^{®} 571 from BASF AG, Germany and shows the following chemical structure:

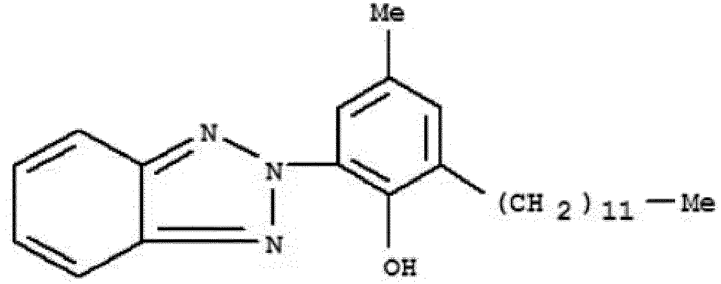

(D) was able to be dissolved into the inventive transparent composition and showed good storage stability. Surprisingly it (D) lead not only to the effect to protect outdoor displays from entering of UVA and UVB-radiation (280nm-400nm) but also lead to the significant technical effect of a reduction of the operating temperature in the devices.

(D) is used from 0.1wt% to 5.0wt% based on the total weight of the composition, preferably from 0.5wt% to 3.0wt%.

### Component (E):

The inventive addition-crosslinking transparent silicone composition may comprise further components (E) already known to be used in such compositions as long such (E) don't affect the transparency of the crosslinked silicone composition. Examples are reinforcing and non-reinforcing fillers, resinous poly-organosiloxanes, different from the siloxanes (A) and (B) and rheological additives.

A further subject of the present invention is the use of the above mentioned hydrosilylation curable silicone composition as glue for optical bonding of the glass to the top surface of a display for outdoor application, like out-door flat screens e.g. used on facades of buildings, for public viewing events, sports stadiums, displays in cars and so on.

A further subject of the present invention is a process for the preparation of displays, with the provision that the above mentioned hydrosilylation curable silicone composition is used as optical bonding glue of the glass to the top surface of the display for outdoor application.

### Examples:

In the examples described below, all of the data for parts and percentages are based on the weight, unless stated otherwise. Unless stated otherwise, the examples below are carried out at a pressure of the ambient atmosphere, i.e. about at 1000 hPa, and at room temperature, i.e. at about 20°C, or at a temperature which is established upon combining the reactants at room temperature without additional heating or cooling. Hereinbelow, all of the viscosity data refer to a temperature of 25°C. The examples below illustrate the invention without having a limiting effect.

### Optical and mechanical properties

### Method to determine yellowing index:

The yellowing index (YI) was determined with a KONICA MINOLTA CM-5 in the L*a*b* color space for initial samples according to ASTM E313-73. In the L*a*b* color space, L* indicates lightness and a* and b* are chromaticity coordinates. a* and b* are color directions: +a* is the red axis, -a* is the green axis, +b* is the yellow axis and -b* is the blue axis.

### Method to determine light transmittance:

The light transmittance was determined with an Analytikjena SPECORD 200.

### Lap shear strength test:

The sample size is 7.0 cm² on soda lime glass substrate with bond-line thickness of 300 microns. The pull test speed is 300mm/min at room temperature. The maximum force measured is reported as adhesion strength.

### Used products:

- TINUVIN^{®} 171 from BASF AG, Germany as compound (D)
- LUMISIL^{®} 100 A/B from Wacker Chemie AG, Germany a (1:1) 2-part addition heat curing silicone gel composition, comprising at least the compounds (A), (B) and (C).

Its features include:
• protect outdoor display form UVA & UVB in sun light
• Self-leveling with low viscosity
• Fast cure at low temperature
• Good optical performance
• Low shrinkage

### Example 1: LUMISIL^{®} 100 + 0.5 % by weight TINUVIN^{®} 171

9995 g of LUMISIL^{®} 100 A and 5 g of TINUVIN^{®} 171 were charged into a reaction vessel equipped with a stirrer. The mixture can also be transferred into a container for SpeedMix equipment. 9995 g of LUMISIL^{®} 100 B and 5 g of TINUVIN^{®} 171 were charged into a reaction vessel equipped with a stirrer. The mixture can also be transferred into a container for SpeedMix equipment. The mixture was stirred for 0.1-0.5 hours while controlling the temperature at 20 °C to prepare a hydrosilylation curable silicone compositions in A and B sides. The A and B sides were mixed as 1:1 ratio to make the final optical bonding silicone with UV blocking capability. The mixture can be cured as room temperature with regular reaction speed or elevated temperature for high reaction speed. Test specimens were prepared and the yellowing index and tansmittance was determined according to the above-mentioned test methods. The UV cutoff starts from 365nm and initial yellow index is about 0.18. The light transmittance is 99.78% at 550nm. The adhesion strength on glass is 2.15 kgf/cm² with cohesive failure mode.

### Example 2: LUMISIL^{®} 100 + 1.0 % by weight TINUVIN^{®} 171

9990 g of LUMISIL^{®} 100 A and 10 g of TINUVIN^{®} 171 were charged into a reaction vessel equipped with a stirrer. The mixture can also be transferred into a container for SpeedMix equipment. 9990 g of LUMISIL^{®} 100 B and 10 g of TINUVIN^{®} 171 were charged into a reaction vessel equipped with a stirrer. The mixture can also be transferred into a container for SpeedMix equipment. The mixture was stirred for 0.1-0.5 hours while controlling the temperature at 20 °C to prepare a hydrosilylation curable silicone compositions in A and B sides. The A and B sides were mixed as 1:1 ratio to make the final optical bonding silicone with UV blocking capability. The mixture can be cured as room temperature with regular reaction speed or elevated temperature for high reaction speed. Test specimens were prepared and the yellowing index and tansmittance was determined according to the above-mentioned test methods. The UV cutoff starts from 370nm and initial yellow index is about 0.24.

### Example 3: LUMISIL^{®} 100 + 1.5 % by weight TINUVIN^{®} 171

9985 g of LUMISIL^{®} 100 A and 15 g of TINUVIN^{®} 171 were charged into a reaction vessel equipped with a stirrer. The mixture can also be transferred into a container for SpeedMix equipment. 9985 g of LUMISIL^{®} 100 B and 15 g of TINUVIN^{®} 171 were charged into a reaction vessel equipped with a stirrer. The mixture can also be transferred into a container for SpeedMix equipment. The mixture was stirred for 0.1-0.5 hours while controlling the temperature at 20 °C to prepare a hydrosilylation curable silicone compositions in A and B sides. The A and B sides were mixed as 1:1 ratio to make the final optical bonding silicone with UV blocking capability. The mixture can be cured as room temperature with regular reaction speed or elevated temperature for high reaction speed. Test specimens were prepared and the yellowing index and tansmittance was determined according to the above-mentioned test methods. The UV cutoff starts from 378nm and initial yellow index is about 0.3.

### Example 4: LUMISIL^{®} 100 + 2.5 % by weight TINUVIN^{®} 171

9975 g of LUMISIL^{®} 100 A and 25 g of TINUVIN^{®} 171 were charged into a reaction vessel equipped with a stirrer. The mixture can also be transferred into a container for SpeedMix equipment. 9975 g of LUMISIL^{®} 100 B and 25 g of TINUVIN^{®} 171 were charged into a reaction vessel equipped with a stirrer. The mixture can also be transferred into a container for SpeedMix equipment. The mixture was stirred for 0.1-0.5 hours while controlling the temperature at 20 °C to prepare a hydrosilylation curable silicone compositions in A and B sides. The A and B sides were mixed as 1:1 ratio to make the final optical bonding silicone with UV blocking capability. The mixture can be cured as room temperature with regular reaction speed or elevated temperature for high reaction speed. Test specimens were prepared and the yellowing index and tansmittance was determined according to the above-mentioned test methods. The UV cutoff starts from 385nm and initial yellow index is about 0.45. The light transmittance is 99.84% at 550nm. The adhesion strength on glass is 1.96 kgf/cm2 with cohesive failure mode.

### Comparative Example 1: LUMISIL^{®} 100 alone

The LUMISIL 100 A and B sides were mixed as 1:1 ratio to make the final optical bonding silicone with UV blocking capability. The mixture can be cured as room temperature with regular reaction speed or elevated temperature for high reaction speed. Test specimens were prepared and the yellowing index and tansmittance was determined according to the above-mentioned test methods. The UV cutoff starts from ~215nm and initial yellow index is typically less than 0.2. The light transmittance is over 99% at 550nm. The adhesion strength on glass is 2.2 kgf/cm2 with cohesive failure mode.

### Discussion of the results:

It is known from above examples that UV blocking material will have effects on UV cutoff, yellow index, and adhesion strength.

The effect on UV cutoff means the UV blocking material can be used as a method to adjust UV cutoff according to different applications.

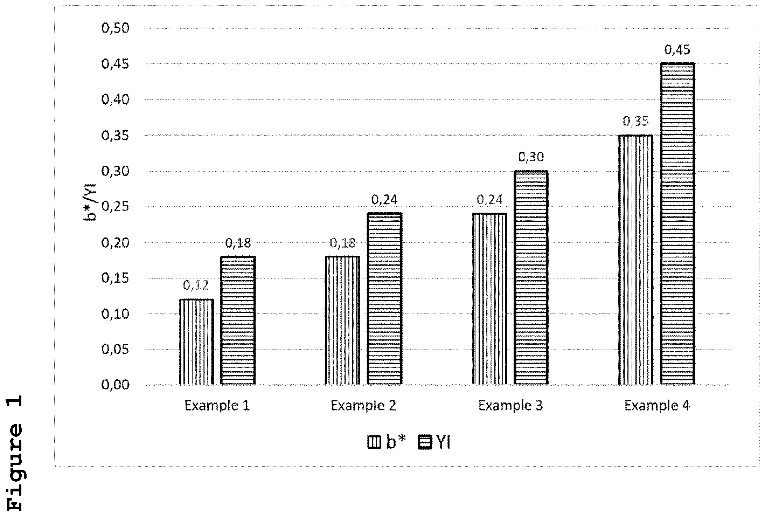

In the diagram according to Figure 1 the relationship between yellow index (YI) and UV block material concentrations can be seen. As can be seen in Figure 1 the use of UV blocker has only minor influence on the measured YI and b* of the initial samples.

The effect on yellow index means the UV blocking material can affect the transparency of optical silicone slightly. Good news is for most outdoor applications the change of yellow index could be ignored, especially when we consider UV blocking materials effectively protect the electronics and lower the device temperature significantly.

The effect on adhesion strength means the UV blocking material can affect the pull strength for optical silicone on glass. However, all the adhesion strength in all these examples are still cohesive failure mode, which is the key requirement for most applications.

## Claims

1. A hydrosilylation curable silicone composition for optical bonding outdoor application comprising,
(A) at least one organopolysiloxane having at least two silicon-bonded alkenyl groups per molecule;
(B) at least one organohydrogenpolysiloxane having at least two silicon-bonded hydrogen atoms per molecule, in an amount such that an amount of silicon-bonded hydrogen atoms in this component being from 0.1 to 20 mol per 1 mol of silicon-bonded alkenyl groups in component (A);
(C) at least one hydrosilylation reaction catalyst, in an amount which accelerates the curing of the present composition
(D) from 0.5wt% to 3.0wt% of the UV-blocker: 2-(2H-Benzotriazol-2-yl)-6-dodecyl-4-methylphenol based on the total weight of the composition.

2. Use of a hydrosilylation curable silicone composition according to claim 1, as glue for the optical bonding of glass to the top surface of a display for outdoor application.

3. A process for the preparation of a display for outdoor application, with the provision that the hydrosilylation curable silicone composition according to claim 1 is used as optical bonding glue of glass to the top surface of the display.

## Patentansprüche

1. Hydrosilylierungshärtbare Siliconzusammensetzung zur optischen Verbindung bei Außenanwendung, umfassend
(A) wenigstens ein Organopolysiloxan mit wenigstens zwei silicongebundenen Alkenylgruppen pro Molekül;
(B) wenigstens ein Organohydrogenpolysiloxan mit wenigstens zwei silicongebundenen Wasserstoffatomen pro Molekül in einer solchen Menge, dass eine Menge von silicongebundenen Wasserstoffatomen in dieser Komponente von 0,1 bis 20 mol pro 1 mol von silicongebundenen Alkenylgruppen in Komponente (A) beträgt;
(C) wenigstens einen Hydrosilylierungsreaktion-Katalysator in einer Menge, die das Härten der vorliegenden Zusammensetzung beschleunigt;
(D) von 0,5 Gew.-% bis 3,0 Gew.-% an dem UV-Blocker: 2-(2HBenzotriazol-2-yl)-6-dodecyl-4-methylphenol bezogen auf das Gesamtgewicht der Zusammensetzung.

2. Verwendung einer hydrosilylierungshärtbaren Siliconzusammensetzung gemäß Anspruch 1 als Klebstoff zur optischen Verbindung von Glas an die obere Oberfläche einer Anzeige zur Außenanwendung.

3. Verfahren zur Herstellung einer Anzeige zur Außenanwendung mit der Maßgabe, dass die hydrosilylierungshärtbare Siliconzusammensetzung gemäß Anspruch 1 als optisch verbindender Klebstoff von Glas an die obere Oberfläche der Anzeige verwendet wird.

## Revendications

1. Composition de silicone durcissable par hydrosilylation pour une application à l'extérieur de liaison optique comprenant :
(A) au moins un organopolysiloxane ayant au moins deux groupes alcényle liés au silicium par molécule ;
(B) au moins un organohydrogénopolysiloxane ayant au moins deux atomes d'hydrogène liés au silicium par molécule, en une quantité telle qu'une quantité d'atomes d'hydrogène liés au silicium dans ce composant soit de 0,1 à 20 moles par 1 mole de groupes alcényle liés au silicium dans le composant (A) ;
(C) au moins un catalyseur de réaction d'hydrosilylation, en une quantité qui accélère le durcissement de la présente composition ;
(D) de 0,5 % en poids à 3,0 % en poids du bloqueur d'UV : 2-(2H-benzotriazol-2-yl)-6-dodécyl-4-méthylphénol sur la base du poids total de la composition.

2. Utilisation d'une composition de silicone durcissable par hydrosilylation selon la revendication 1, en tant que colle pour la liaison optique de verre sur la surface supérieure d'un affichage pour une application à l'extérieur.

3. Procédé pour la préparation d'un affichage pour une application à l'extérieur, à la condition que la composition de silicone durcissable par hydrosilylation selon la revendication 1 soit utilisée comme colle de liaison optique de verre sur la surface supérieure de l'affichage.
